# EUROPÄISCHE PATENTSCHRIFT

(11) **EP 1 287 315 B1**
(45) Veröffentlichungstag und Bekanntmachung des Hinweises auf die Patenterteilung: **08.07.2009**
(21) Anmeldenummer: 01960218.4
(22) Anmeldetag: 15.05.2001
(51) Int. Cl.: G01F 1/22

(54) **DURCHFLUSSMESSER**
FLOWMETER
DEBITMETRE

(30) Priorität: 19.05.2000 DE 20009024 U
(43) Veröffentlichungstag der Anmeldung: 05.03.2003
(73) Patentinhaber: GEMÜ Gebrüder Müller Apparatebau GmbH & Co. KG, 74653 Ingelfingen (DE)
(72) Erfinder: MÜLLER, Fritz, 74653 Ingelfingen (DE); HEGER, Klaus, 74653 Ingelfingen (DE)
(74) Vertreter: Dreiss
(86) Internationale Anmeldenummer: PCT/EP2001/005533
(87) Internationale Veröffentlichungsnummer: WO 2001/088485

(56) Entgegenhaltungen:
- US-A- 3 889 535
- US-A- 3 979 955
- US-A- 4 896 534
- US-A- 4 938 078
- US-A- 5 078 004

## Beschreibung

Die Erfindung befaßt sich mit einem Durchflußmesser mit einem in einer Strömung in einem Meßrohr frei schwebenden Schwebekörper, auf den eine Strömungskraft, ein Auftrieb und ein Gewicht einwirken.

Es gibt schon seit langem Durchflußmesser mit einem frei schwebendem Schwebekörper ohne Führungsstangen, Führungsrippen, Führungsflächen oder dergleichen. Zur besseren Selbststabilisierung kann der Schwebekörper in Rotation versetzt werden. Bei einem solchen Durchflußmesser wirkt das Gewicht des Schwebekörpers der Summe aus Strömungskraft und Auftrieb entgegen und durch die Hubhöhe des Schwebekörpers kann ausgehend von einer Null-Lage über eine Meßskala die Durchflußmessung vorgenommen werden. Hierbei sind dem Schwebekörper durch das Gewicht des verwendeten Materials Grenzen gesetzt, und häufig müssen Durchflußmesser eingesetzt werden, deren Meßrohr eine größere Weite als die zugeordnete Leitung hat.

Ferner gibt es auch sogenannte Federscheiben-Durchflußmesser. Hierbei wirkt der Summe aus Strömungskraft und Auftrieb eine Meßfeder an einer Meßscheibe und das Gewicht der Meßscheibe entgegen. Die Meßscheibe ist zusammen mit der Meßfeder zentrisch in Längsrichtung im Meßrohr an einer Führungsstange angeordnet, auf der sie sich verschieben können. Durch die Führungsstange bedingt kommt es zu Reibungen, welche die Messgenauigkeit beeinträchtigen, und es kann auch vorkommen, dass sich die Messscheibe mit der Messfeder an der Führungsstange festsetzt, so dass der Durchflussmesser nicht mehr funktionsfähig ist.

Das als nächstliegend angesehene Dokument US-A-3 979 955 offenbart einen Durchflussmesser mit einem in einem Messrohr in einer Strömung schwebenden Schwebekörper, auf den eine Strömungskraft, ein Auftrieb und ein Gewicht einwirken, wobei zur Erzeugung einer Gegenkraft zur Strömungskraft, zum Auftrieb und zum Gewicht eine Messfeder mit dem Schwebekörper fest verbunden ist.

Ähnliche Durchflussmesser sind aus den Dokumenten US-A-4 938 078 und US-A-4 831 886 bekannt.

Die Erfindung zielt darauf ab, unter Überwindung der geschilderten Schwierigkeiten, einen Durchflussmesser bereitzustellen, welcher eine zuverlässige Durchflussmessung mit möglichst geringem Bauraum und ohne Gefahr einer Behinderung durch Führungsmittel, wie Führungsstangen oder dergleichen, gestattet.

Nach der Erfindung wird hierzu ein Durchflussmesser zum Messen der Größe eines Durchflusses eines strömenden Mediums mit einem in einem Messrohr in einer Strömung frei schwebenden Schwebekörper, der sich in Abhängigkeit von der Größe des Durchflusses bewegt und bei konstantem Durchfluss eine entsprechende Gleichgewichtslage einnimmt, in welcher die Summe aus Strömungskraft, Auftrieb und Gewicht im Gleichgewicht zu einer von einer Messfeder erzeugten Gegenkraft sind, ein Ende der Messfeder an einem Ende des Messrohrs gelagert ist und ein weiteres Ende der Messfeder mit dem Schwebekörper verbunden ist, derart weitergebildet, dass die Messfeder derart ausgelegt und mit dem Schwebekörper verbunden ist, dass sie in einer Null-Lage des Schwebekörpers nahezu vollständig im Schwebekörper aufgenommen ist.

Bei dem Durchflussmesser können Führungsmittel für den Schwebekörper entfallen, da die Messfeder an dem Schwebekörper angebracht ist. Somit lassen sich Nachteile bedingt durch Reibung oder durch Blockierung an den Führungsmitteln vermeiden. Hierdurch lässt sich die Betriebszuverlässigkeit eines solchen Durchflussmessers wesentlich verbessern. Ferner lässt sich der Messbereich auf einfache Weise durch eine entsprechende Wahl von geeigneten Messfedern in einem weiten Bereich ändern. Hierdurch wird eine Anpassung an den maximalen Durchfluss einer Leitung erreicht. Insbesondere kann das Messrohr des Durchflussmessers etwa die gleiche Nennweite wie die zugeordnete Leitung, wie eine Rohrleitung oder dergleichen, haben, und daher nimmt der Durchflussmesser nach der Erfindung einen äußerst geringen Bauraum ein. Die Abmessungen lassen sich daher gegenüber einem üblichen Schwebekörper-Durchflussmesser reduzieren.

Der Durchflussmesser ist auch geeignet, bei einer Anwendung mit einer Durchströmung von oben nach unten eingesetzt zu werden. Natürlich ist die zu erfassende Strömung immer gegen das spitze Ende des Schwebekörpers gerichtet.

Erfindungsgemäß ist die Messfeder mit dem Schwebekörper derart verbunden, dass in der Null-Lage des Schwebekörpers die Messfeder nahezu vollständig im Schwebekörper aufgenommen ist bzw. von diesem vollständig umschlossen ist. Somit ist die Verbindungsstelle von Messfeder und Schwebekörper immer vor dem durchströmenden Medium geschützt angeordnet. Auch lässt sich hierdurch die Baulänge eines Durchflussmesser nach der Erfindung reduzieren.

Vorzugsweise ist der Schwebekörper selbststabilisierend ausgebildet. Dies kann mit Hilfe von geometrischen Mitteln erreicht werden. Durch diese Selbststabilisierung hat der Schwebekörper ein sehr ruhiges Eigenverhalten in der Strömung, so dass vorgeschaltete Beruhigungsstrecken vor dem Durchflussmesser nicht benötigt werden.

Zur noch besseren Stabilisierung kann die Messfeder am Schwebekörper oder am Messrohr drehbar gelagert sein.

Um eine möglichst kleine bewegte Masse zur Verbesserung der Eigendynamik des Durchflussmessers bei der erfindungsgemäßen Auslegung zu haben, ist der Schwebekörper vorzugsweise aus gewichtsmäßig leichtem und auch möglichst einfach zu bearbeitendem Material hergestellt. Hierfür kommt insbesondere Kunststoff in Betracht. Vorzugsweise sollte die Dichte (Masse/Volumen) des Schwebekörpers der Dichte des strömenden Materials entsprechen.

Insbesondere kann bei dem Durchflussmesser nach der Erfindung das Messrohr konisch oder zylindrisch ausgebildet sein, da die Federkraft mit der Auslenkung des Schwebekörpers steigt. Bei einem zylindrischen Rohr erhält man ein in etwa lineare

Skala, bei einem konischen Meßrohr wird die Teilung bei größerem Durchfluß enger werden.

Zusammenfassend ist es bei dem erfindungsgemäßen Durchflußmesser wesentlich, daß man einen frei schwebenden Schwebekörper ohne jegliche Führungsmittel hat, mit welchem eine Meßfeder zur Erzeugung einer Gegenkraft zur Summe aus Strömungskraft zum Auftrieb und zum Gewicht fest verbunden ist. Durch diese Kombination wird ein Durchflußmesser bereitgestellt, welcher betriebszuverlässig weitgehend unabhängig von der Ausrichtung des Meßrohrs arbeiten kann und der eine einfache Anpassung an jeweils gewünschte unterschiedliche Meßbereiche gestattet, was mit Hilfe der entsprechenden Wahl der Meßfeder möglich ist. Hierdurch läßt sich ein Durchflußmesser universell in Leitungssystemen einsetzen.

Die Erfindung wird nachstehend an Hand einer bevorzugten Ausführungsform unter Bezugnahme auf die beigefügte Zeichnung ohne jeglichen beschränkenden Charakter näher erläutert.
Fig. 1 zeigt eine Längsschnittansicht eines Durchflußmessers in Nullage; und
Fig. 2 eine Längsschnittansicht einer Ausführungsvariante eines Durchflußmessers in einer Meßposition oder Arbeitsstellung.

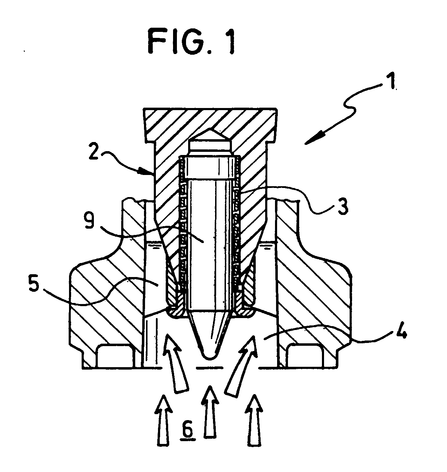

In Figur 1 der Zeichnung ist der Durchflußmesser insgesamt mit 1 bezeichnet. Der Durchflußmesser 1 umfaßt ein in Fig. 1 nicht näher dargestelltes Meßrohr, welches konisch oder zylindrisch ausgebildet sein kann und welches von einem Medium durchströmt wird. In dem vom Medium durchströmten Meßrohr ist ein Schwebekörper 2 frei schwebend angeordnet. Auf diesen Schwebekörper 2 wirken eine Strömungskraft, ein Auftrieb und dessen Gewicht ein.

Zur Erzeugung einer Gegenkraft zur Summe aus Strömungskraft, Auftrieb und Gewicht ist der Schwebekörper 2 fest mit einer Meßfeder 3 verbunden. Die Meßfeder 3 bestimmt hierbei den Meßbereich des Durchflußmessers 1, und wenn andere Meßbereiche benötigt werden, kann man durch einfache Wahl der entsprechenden Meßfeder 3 eine Abstimmung hierauf vornehmen. Hierdurch kann eine Anpassung an den maximalen Durchfluß in einer zugeordneten und nicht dargestellten Leitung, wie einer Rohrleitung, erfolgen.

In der in Figur 1 gezeigten Null-Lage des Schwebekörpers 2 ist die Meßfeder 3 nahezu vollständig im Schwebekörper aufgenommen, und entsprechend der Hubhöhe des Schwebekörpers 2 wird dann die Meßfeder 3 in entsprechender Weise mehr oder weniger gestreckt und tritt dann aus dem Schwebekörper 2 aus. Der Schwebekörper 2 ist selbststabilisierend ausgelegt, wozu Einkerbungen oder dergleichen vorgesehen sein können, und insbesondere hat der Schwebekörper 2 eine zur Stabilisierung dienende Außenkontur.

Zur weiteren Verbesserung der Stabilität des Schwebekörpers 2 kann die Meßfeder 3 am Schwebekörper 2 oder am nicht näher dargestellten Meßrohr drehbar gelagert sein.

Insbesondere ist der Schwebekörper 2 aus einem gewichtsmäßig leichten Material hergestellt, welches sich auf einfache Weise insbesondere maschinell bearbeiten läßt. Hierfür kommt insbesondere Kunststoff in Betracht. Vorzugsweise soll der Schwebekörper die gleiche Dichte (Masse/Volumen) haben wie das strömende Medium.

Dieser Schwebekörper 2 ist wie dargestellt in einem durchströmten Querschnitt 4 angeordnet. Dieser durchströmte Querschnitt 4 im nicht dargestellten Meßrohr ist von einem entsprechenden Einsatzkörper 5 begrenzt. Das Meßrohr kann konisch oder zylindrisch ausgebildet sein.

Zur Durchflußmessung in Figur 1 von unten nach oben (Strömung 6), bewegt sich der frei schwebende Schwebekörper 2 in dem Meßrohr in Abhängigkeit von der Größe des Durchflusses, und bei konstantem Durchfluß nimmt der Schwebekörper eine entsprechende Gleichgewichtslage ein, in welcher die Summe aus Strömungskraft, Auftrieb und Gewicht im Gleichgewicht zu der von der Meßfeder 3 erzeugten Gegenkraft ist. Die Strömung 6 ist immer gegen das spitz zulaufende Ende des Schwebekörpers 2 gerichtet. Das Gerät selbst kann aber, wenn Gewicht und Auftrieb des Schwebekörpers 2 gleich groß sind, in jeder beliebigen Lage eingebaut werden und es läßt sich somit jede beliebige Strömungsrichtung messen. Wenn man am in Fig. 1 nicht dargestellten Meßrohr entsprechende Skalen vorsieht, kann man dann durch entsprechende Skalierung die Durchflüsse am Meßrohr des Durchflußmessers 1 ablesen. Der frei schwebende Schwebekörper 2 bewegt sich in der Strömung im Meßrohr entsprechend des Durchflusses durch eine mit dem Durchflußmesser entsprechend verbundene nicht dargestellte Leitung, wie eine Rohrleitung. Der Durchflußmesser 1 gestattet eine zuverlässige und genaue Messung des Durchflusses, und insbesondere ist der Durchflußmesser kompakt ausgelegt und kann im Durchmesser gleich wie die Nennweite der zugeordneten Leitungen bemessen sein. Für eine horizontale oder eine vertikale Durchströmung von oben nach unten kann der Durchflußmesser 1 entsprechend um 90° oder 180° gedreht werden.

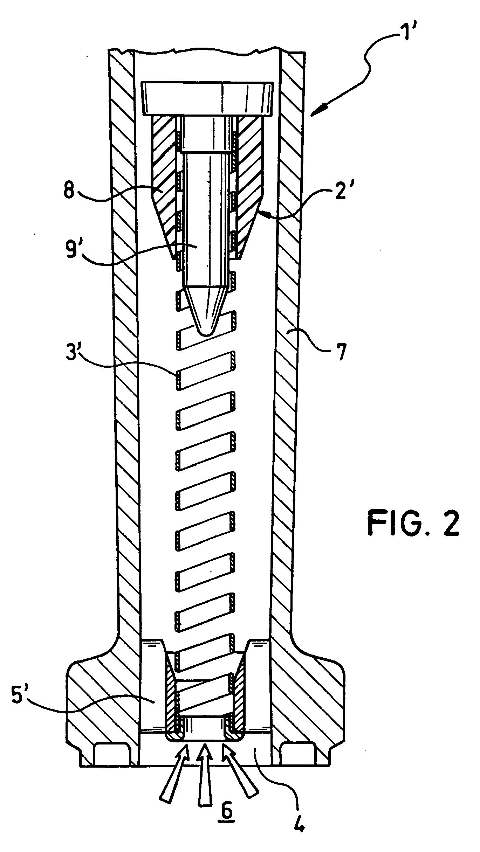

Figur 2 zeigt eine Ausführungsvariante eines Durchflußmessers 1' in einer Arbeitsposition, in welcher ein Durchfluß in einem Meßrohr 7 in einer Gleichgewichtslage gemessen wird. Gleiche oder ähnliche Teile wie bei der in Figur 1 gezeigten Ausführungsform sind mit denselben Bezugszeichen, aber einem zusätzlichen ""' versehen. In das Meßrohr 7 ist ein Einsatzkörper 5' an einem Ende eingesetzt. Der Schwebekörper 2' umfaßt eine Hülse 8, in welcher ein Schwebekörperelement 9 unter Zwischenlage der Meßfeder 3' eingeklemmt ist. Das andere Ende der Meßfeder 3' ist am Einsatzkörper 5' festgelegt.

Abgesehen von diesen konstruktiven Unterschieden stimmt die Funktions- und Arbeitsweise des Durchflußmessers 1' mit jener der zuvor beschriebenen ersten Ausführungsform des Durchflußmessers 1 überein.

Selbstverständlich ist die Erfindung nicht auf die in der Zeichnung dargestellten und zuvor beschriebenen Einzelheiten der bevorzugten Ausführungsform beschränkt, sondern es sind zahlreiche Abänderungen und Modifikationen möglich, die der Fachmann im Bedarfsfall treffen wird, ohne den Erfindungsgedanken zu verlassen.

So kann beispielsweise die Meßfeder 3 auch auf andere wie die dargestellte Weise mit dem Schwebekörper 2 verbunden sein, und es ist nicht zwingend erforderlich, daß die Meßfeder 3 in der Null-Lage des Schwebekörpers 2 von diesem umschlossen wird. Bei dem erfindungsgemäßen Durchflußmesser 1 übernimmt der freischwebende und sich selbststabilisierende Schwebekörper 2 die Führungsfunktion der Meßfeder 3 bei der Bewegung in der Strömung im Meßrohr. Da der Schwebekörper 2 eine sehr gute Eigenstabilität hat, können auch vorgeschaltete Beruhigungsstrecken bei dem Leitungssystem entfallen. Hierdurch ergeben sich beträchtliche Vereinfachungen.

### Bezugszeichenliste

- 1: Durchflußmesser in Fig.1
- 1': Durchflußmesser in Fig.2
- 2: Schwebekörper in Fig.1
- 2': Schwebekörper in Fig.2
- 3: Meßfeder in Fig.1
- 3': Meßfeder in Fig.2
- 4: durchströmter Querschnitt
- 5: Einsatzkörper in Fig.1
- 5': Einsatzkörper in Fig.2
- 6: Strömung
- 7: Meßrohr
- 8: Hülse
- 9: Schwebekörperelement in Fig.1
- 9': Schwebekörperelement in Fig.2

## Patentansprüche

1. Durchflussmesser zum Messen der Größe eine Durchflusses eines strömenden Mediums mit einem in einem Messrohr (7) in einer Strömung (6) frei schwebenden Schwebekörper (2; 2'), der sich in Abhängigkeit von der Größe des Durchflusses bewegt und bei konstantem Durchfluss eine entsprechende Gleichgewichtslage einnimmt, in welcher die Summe aus Strömungskraft, Auftrieb und Gewicht im Gleichgewicht zu einer von einer Messfeder (3; 3') erzeugten Gegenkraft sind, ein Ende der Messfeder (3; 3') an einem Ende des Messrohrs (7) gelagert ist und ein weiteres Ende der Messfeder (3; 3') mit dem Schwebekörper (2; 2') verbunden ist, **dadurch gekennzeichnet, dass** die Messfeder (3; 3') derart ausgelegt und mit dem Schwebekörper (2, 2') verbunden ist, dass sie in einer Null-Lage des Schwebekörpers (2; 2') nahezu vollständig im Schwebekörper (2; 2') aufgenommen ist.

2. Durchflussmesser nach Anspruch 1, **dadurch gekennzeichnet, dass** der Schwebekörper (2; 2') eine zur Stabilisierung dienende Außenkontur hat und Einkerbungen aufweisen kann.

3. Durchflussmesser nach Anspruch 1 oder 2, **dadurch gekennzeichnet, dass** die Messfeder (3; 3') am Schwebekörper (2; 2') oder am Messrohr (7) drehbar gelagert ist.

4. Durchflussmesser nach einem der vorangehenden Ansprüche, **dadurch gekennzeichnet, dass** der Schwebekörper (2; 2') und/oder ein Schwebekörperelement (9; 9'), das unter Zwischenlage der Messfeder (3; 3') in eine Hülse (8) des Schwebekörpers (2; 2) geklemmt ist, aus Kunststoff hergestellt sind/ist.

5. Durchflussmesser nach einem der vorangehenden Ansprüche, **dadurch gekennzeichnet, dass** das Messrohr (7) konisch oder zylindrisch ausgebildet ist.

## Claims

1. A flowmeter for measuring the flow rate of a flowing medium, comprising a floating body (2, 2') which floats freely in a medium stream (6) in a measuring tube (7) which moved dependent on the flow rate and has a position of equilibrium with constant flow, in which the sum of flowing force, buoyancy and weight is in balance to the counterforce generated by the measuring spring (3; 3'), one end of the measuring spring (3; 3') is located at the end of the measuring tube (7) and another end of the measuring spring (3; 3') is connected to the floating body (2; 2'), **characterized in that** the measuring spring (3; 3') is so dimensioned and connected to the floating body (2;, 2') as to be substantially received in the floating body (2; 2'), when the floating body (2; 2') assumes the zero position.

2. The flowmeter of claim 1, **characterized in that** the floating body (2; 2')has an outer contour or notches that promotes stabilization.

3. The flowmeter of claim 1 or 2, **characterized in that** the measuring spring (3; 3') is supported rotatably upon the floating body (2; 2') or the measuring tube (7).

4. The flowmeter of one of the preceding claims, **characterized in that** the floating body (2; 2') and/or a floating body element (9; 9'), which is clamped at interposition of the measuring spring (3; 3') in a sleeve (8) of the floating body (2; 2') is made of plastic material.

5. The flowmeter of one of the preceding claims, **characterized in that** the measuring tube (7) has a conical or cylindrical configuration.

## Revendications

1. Débitmètre destiné au mesurage de la grandeur d'un débit d'un fluide en écoulement, comportant un rotamètre (2 ; 2') flottant librement dans un écoulement (6) à l'intérieur d'un tube de mesure (7) et qui se déplace en fonction de la grandeur de l'écoulement et adopte en cas de débit constant une position d'équilibre correspondante dans laquelle la somme de la force d'écoulement, de la portance et du poids est en équilibre par rapport à une force antagoniste produite par un ressort de mesure (3 ; 3'), une extrémité du ressort de mesure (3 ; 3') est montée à une extrémité du tube de mesure (7) et une autre extrémité du ressort de mesure (3 ; 3') est reliée au rotamètre (2 ; 2'), **caractérisé en ce que** le ressort de mesure (3 ; 3') est configuré et relié au rotamètre (2 ; 2') de telle manière qu'il est pratiquement entièrement logé dans le rotamètre (2 ; 2') dans une position nulle du rotamètre (2 ; 2').

2. Débitmètre selon la revendication 1, **caractérisé en ce que** le rotamètre (2 ; 2') est muni d'un contour extérieur servant à la stabilisation et peut présenter des entailles.

3. Débitmètre selon la revendication 1 ou 2, **caractérisé en ce que** le ressort de mesure (3 ; 3') est monté en rotation sur le rotamètre (2 ; 2') ou sur le tube de mesure (7).

4. Débitmètre selon une des revendications précédentes, **caractérisé en ce que** le rotamètre (2 ; 2') et/ou un élément (9 ; 9') du rotamètre qui est serré en position intermédiaire du ressort de mesure (3 ; 3') dans une douille (8) du rotamètre (2 ; 2) sont/est fabriqué(s) en matière plastique.

5. Débitmètre selon une des revendications précédentes, **caractérisé en ce que** le tube de mesure (7) est réalisé pour être conique ou cylindrique.
